# EUROPEAN PATENT SPECIFICATION

(11) **EP 1 908 324 B1**
(45) Date of publication and mention of the grant of the patent: **11.03.2015**
(21) Application number: 06785524.7
(22) Date of filing: 23.06.2006
(51) Int. Cl.: H04W 48/18, H04W 48/16

(54) **APPARATUS AND METHOD FOR HOME NETWORK SEARCH**
VORRICHTUNG UND VERFAHREN ZUR HEIMNETZWERK-SUCHE
DISPOSITIF ET PROCEDE POUR LA RECHERCHE DU RESEAU DE RATTACHEMENT

(30) Priority: 24.06.2005 IN KO05552005
(43) Date of publication of application: 09.04.2008
(60) Divisional application: 15150895.9
(73) Proprietor: Motorola Mobility LLC, Libertyville, IL 60048 (US)
(72) Inventor: HOWELL, Stephen, A., Gloucester Gloucestershire GL4 3TQ (GB); DAS, Prashanti, Bangalore, Karnataka 560043 (IN); RAMACHANDRA, Srikrishna, Bangalore, Karnataka 560030 (IN)
(74) Representative: Boult Wade Tennant
(86) International application number: PCT/US2006/024674
(87) International publication number: WO 2007/002524

(56) References cited:
- US-A1- 2002 119 774
- US-A1- 2005 107 082
- "Non-Access-Stratum (NAS) functions related to Mobile Station (MS) in idle mode" 3GPP TS 23.122 V7.2.0, [Online] 15 June 2005 (2005-06-15), XP002400554 Retrieved from the Internet: URL:http://www.3gpp.org/ftp/Specs/archive/ 23_series/23.122/23122-720.zip> [retrieved on 2006-09-26]

## Description

### BACKGROUND

### Technical Field

The present disclosure is directed to a method and apparatus for a home network search. More particularly, the present disclosure is directed to performing a home public land mobile network search while in a visiting public land mobile network that is using a different mobile country code from the home public land mobile network.

### Background Art

Presently, a mobile communication device cannot move to its home public land mobile network (HPLMN) during a periodic public land mobile network (PLMN) search when the mobile is registered on a visiting public land mobile network (VPLMN) using a different mobile country code (MCC) from its HPLMN. For example, the mobile communication device is effectively outside of its home country. This limitation creates problems when the mobile communication device is in a country which shares multiple country codes. For example Hong Kong became part of China and some of the existing operators continue to use different country codes. Also, many countries have multiple MCC's allocated for use by different operators and therefore, the use of a single MCC to identify a country is not always possible. For example most countries in Europe have two MCC's allocated to the geographical region.

Unfortunately, a user of a mobile communication device, under such conditions, potentially ends up paying more due to being registered, or "roaming," on a VPLMN even though the user may be in the vicinity of the HPLMN. An operator of an HPLMN can also potentially loose out on revenue because its subscribers will be roaming all of the time after loosing coverage of the HPLMN as long as the VPLMN coverage exists.

For example, a mobile communication device can lose coverage of the HPLMN and moves to a different VPLMN with a different country code in the same country. After a while the mobile communication device may come back to coverage of an overlap area of the HPLMN and the VPLMN. Unfortunately, because the VPLMN has a different country code from the HPLMN, the mobile communication device is forbidden from camping and registering on its HPLMN, even if it was originally registered on its HPLMN in the current vicinity.

Thus, there is a need for performing a HPLMN search while in a VPLMN network that is using a different mobile country code from the HPLMN but is in a concurrent region with the HPLMN.

US patent application publication no. US 2005/0107082 describes a network selection method and apparatus with home network prioritization in country border regions. A mobile station is associated with a home communication network having a home MCC. Outside of the home network country, however, the mobile station selects and operates with a non-home communication network having a visiting MCC. After expiration of a timer, the mobile station scans to identify a plurality of networks in a coverage area within which the mobile station is operating. If the home network having the home MCC is identified as being available, the mobile station selects and operates with the home network. Otherwise, if the non-home network having the visiting MCC is identified as being available, the mobile station selects and operates with the non-home network.

US patent application publication no. US 2002/0119774 describes a method for selecting a PLMN to serve a mobile station including the step of receiving at the mobile station the MCC of neighboring countries. If a preferred PLMN (e.g. the HPLMN) of the mobile station is associated with one of the provided MCCs, the mobile station searches for the preferred PLMN by scanning for the PLMN. Once the preferred PLMN is found, the mobile station changes to the preferred PLMN.

### SUMMARY

In accordance with the present invention, there is provided a method in a mobile communication device and a mobile communication device as recited in the accompanying claims.

### BRIEF DESCRIPTION OF THE DRAWINGS

The embodiments of the present disclosure will be described with reference to the following figures, wherein like numerals designate like elements, and wherein:
Fig. 1 is an exemplary block diagram of a system according to one embodiment;
Fig. 2 is an exemplary block diagram of a mobile communication device according to one embodiment;
Fig. 3 is an exemplary flowchart illustrating the operation of a mobile communication device according to one embodiment; and
Fig. 4 is an exemplary flowchart illustrating the operation of a mobile communication device according to another embodiment.

### DISCLOSURE OF THE INVENTION

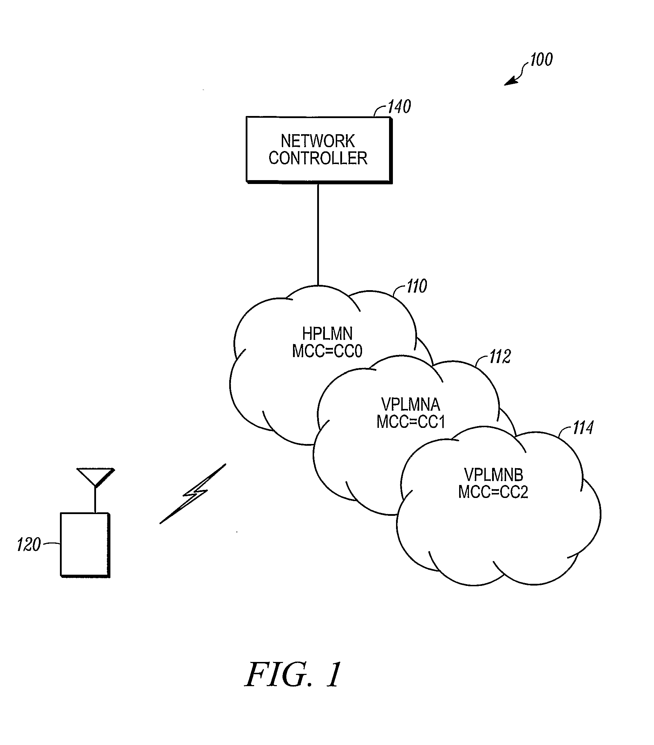

Fig. 1 is an exemplary block diagram of a system 100 according to one embodiment. The system 100 can include a network controller 140, a home network 110, visiting networks 112 and 114, and a terminal 120. The terminal 120 may be a mobile communication device, such as wireless telephone, a cellular telephone, a personal digital assistant, a pager, a personal computer, a selective call receiver or any other device that is capable of sending and receiving communication signals on a network including wireless network.

In an exemplary embodiment, the network controller 140 can be connected to the home network 110. The network controller 140 may be located at a base station, at a radio network controller, or anywhere else on the network 110. The network controller 140 may also or alternately be connected to the visiting networks 112 and 114. The networks 110, 112, and 114 may include any type of network that is capable of sending and receiving signals, such as wireless signals. For example, the network 110 may include a wireless telecommunications network, a cellular telephone network, a satellite communications network, and other like communications systems. Furthermore, the network 110 may include more than one network and may include a plurality of different types of networks. Thus, the networks 110, 112, and 114 may include a plurality of data networks, a plurality of telecommunications networks, a combination of data and telecommunications networks and other like communication systems capable of sending and receiving communication signals. The home network 110 can be a home public land mobile network (HPLMN) with a mobile country code (MCC) of CC0. The visiting network 112 can be a visiting public land mobile network (VPLMN) with a MCC of CC1. The visiting network 114 can be a VPLMN with a MCC of CC2. The HPLMN 110 can have at least one first country code of a plurality of country codes, the at least one first country code being the home country code. Also, the VPLMN 112 can have at least one second country code of a plurality of country codes, the at least one second country code being a visiting country code. For example, the VPLMN 112 can be a PLMN, different from the HPLMN 110, where the MCC part of the PLMN identity is the same as MCC of the international mobile subscriber identity or the MCC part of the PLMN identity and MCC of the HPLMN are alternate country codes.

In operation, the HPLMN 110 can be the home network of the terminal 120. The terminal 120 can store an alternate country code for the HPLMN 110 as a second country code. The alternate country code can be different from any MCC's assigned to the HPLMN. The alternate country code for the HPLMN 110 can be stored in a public land mobile network list on a subscriber identity module (SIM) in the terminal 120. The terminal 120 can operate on the HPLMN. The terminal 120 may lose coverage of the HPLMN 110 and detect coverage of the VPLMN 112. The terminal 120 can then operate on the VPLMN 112 having the second country code. While operating on the VPLMN 112, the terminal 120 can perform a public land mobile network search and switch to the HPLMN 110 based on the public land mobile network search. The terminal can also receive an over the air refresh message for modifying stored country codes and modify country codes stored in the terminal 120 based on the over the air refresh message.

Thus, for example, an entry in a SIM card can be used by the terminal 120 when making decisions on whether or not to perform a switch to the HPLMN 110. This entry can be pre-programmed by a network operator at the time of subscription or can be dynamically changed using the "Over The Air" programming.

An exemplary entry can look like the following where:
- M = 8 : Maximum number of alternate country codes for one home country,
- K <= M : Actual number of alternate country codes for one home country,
- HCC is the home country code, and
- If K > M, then K+1th to M entries can be invalid:

| |
|---|
| HCC |
| K (<= M) (Actual number of alternate country codes). |
| HCC1 |
| HCC2 |
| ... |
| HCCK |

From the table for the HPLMN, which bears the country code as HCC, the country codes HCCl through HCCK can be treated as "alternate country codes" and the terminal 120 can be allowed to switch back to the HPLMN if it is on a PLMN bearing the country code belonging to any of HCC1 through HCCK. Similarly, the terminal 120 can be allowed to switch to a higher preferred PLMN bearing the country code belonging to any of HCC1 through HCCK, if it is currently on a PLMN bearing the country codes belonging to any of HCC1 through HCCK.

To accommodate the case of a user card where the terminal 120 can have multiple HPLMN codes, this structure can be expanded where:
- N : Maximum number of HPLMN identities,
- M(=8) : Maximum number of alternate country codes, and
- iK : the identity for the ith HPLMN ID, where ik <=M,

| |
|---|
| Ith entry HCC - i |
| iK(<=M) (No. of valid alternate country codes) |
| HCC-i1 |
| HCC - i2 |
| ... |
| HCC - iK |
| (If (ik < M), then ik+1th to M entries can be invalid). |
| Jth entry HCC - j |
| jK : No. of valid alternate country codes |
| HCC-j1 |
| HCC - j2 |
| ... |
| HCC - jK |
| ... |
| ... |
| Nth entry HCC - N |
| NK- No. of valid alternate country codes |
| HCC-N1 |
| HCC - N2 |
| ... |
| HCC-NK |
| ... |

Thus, the terminal 120 can come back to the HPLMN 110 from the VPLMN 112. For example, the terminal 120 may be in coverage and camp on a VPLMN with a different country code as Home country code. The terminal 120 may come back to an overlap coverage area of the HPLMN 110 and the VPLMN 112. The terminal 120 can then come back to the HPLMN 110 from the VPLMN 112.

Without this disclosure, the terminal 120 is not be able to come back to HPLMN as long as it is in overlap area of the VPLMN 112 and the HPLMN 110. The disclosure allows for a SIM element 'Alternate home country codes' file that indicates a visited country code and a home country code are equivalent. The terminal 120 can then come back to the home network.

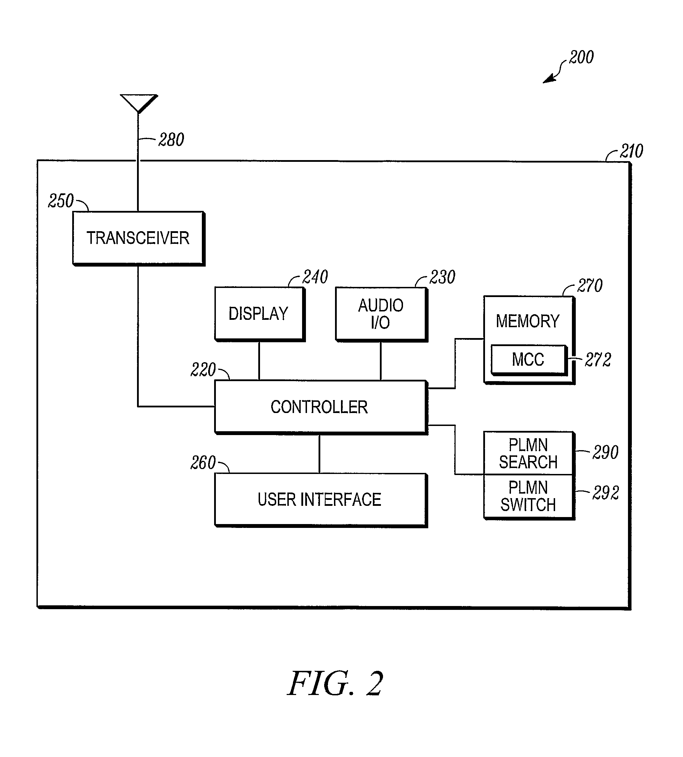

Fig. 2 is an exemplary block diagram of a mobile communication device 200, such as the terminal 120, according to one embodiment. The mobile communication device 200 can include a housing 210, a controller 220 coupled to the housing 210, audio input and output circuitry 230 coupled to the housing 210, a display 240 coupled to the housing 210, a transceiver 250 coupled to the housing 210, a user interface 260 coupled to the housing 210, a memory 270 coupled to the housing 210, and an antenna 280 coupled to the housing 210 and the transceiver 250. The mobile communication device 200 can also include a PLMN search module 290 and a PLMN switch module 292. The PLMN search module 290 and the PLMN switch module 292 can be coupled to the controller 220, can reside within the controller 220, can reside within the memory 270, can be autonomous modules, can be software, can be hardware, or can be in any other format useful for a module on a mobile communication device 200.

The display 240 can be a liquid crystal display (LCD), a light emitting diode (LED) display, a plasma display, or any other means for displaying information. According to one embodiment, the display 240 can, but does not need to indicate when the mobile communication device is roaming on a VPLMN other than the HPLMN. The transceiver 250 may include a transmitter and/or a receiver. The audio input and output circuitry 230 can include a microphone, a speaker, a transducer, or any other audio input and output circuitry. The user interface 260 can include a keypad, buttons, a touch pad, a joystick, an additional display, or any other device useful for providing an interface between a user and an electronic device. The memory 270 may include a random access memory, a read only memory, an optical memory, a subscriber identity module memory, or any other memory that can be coupled to a mobile communication device. The memory 270 can include mobile country code storage 272. The mobile country code storage 272 can include an alternate country code 272 for the home public land mobile network 110. The mobile country code storage 272 can be located on a subscriber identity module memory. Furthermore the mobile country code storage can include multiple country codes for the HPLMN 110 including at least one alternate country code for the HPLMN 110. Thus, the HPLMN can have at least one MCC, such as a home MCC and the VPLMN can have at least one MCC.

The alternate country code can be the same code as a VPLMN country code. For example, the alternate country code for the HPLMN 110 can be CC 1. Thus, when the mobile communication device 200 is operating on the VPLMN 112 with a MCC=CC1, the mobile communication device 200 can know that it may be possible to operate on the HPLMN 110 because the alternate country code for the HPLMN 110 is the same as the MCC for the VPLMN 112.

In operation, the controller 220 can operate the mobile communication device 200 on a VPLMN 112 having a second country code CC1. The PLMN search module 290 can perform a public land mobile network search. The public land mobile network search can be a higher priority public land mobile network search that searches for a higher priority PLMN than the current PLMN. The PLMN switch module 292 can switch the mobile communication device 200 to the HPLMN 110 based on the public land mobile network search. The PLMN search module 290 can detect the HPLMN 110 and the PLMN switch module 292 can switch to the HPLMN 110 based on the PLMN search module 290 detecting the HPLMN 110. The transceiver 250 can receive an over the air refresh message for modifying country codes stored in the memory 270 and the controller 220 can modify the stored country codes based on the over the air refresh message.

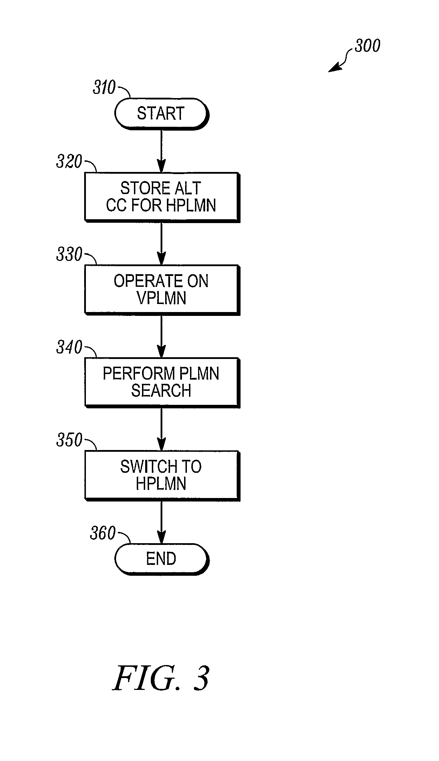

Fig. 3 is an exemplary flowchart 300 illustrating the operation of the mobile communication device 200 according to one embodiment. In step 310, the flowchart begins. In step 320, the mobile communication device 200 can store an alternate country code for the HPLMN 110. The mobile communication device 200 can store the alternate country code for the HPLMN 110 in a public land mobile network list on a subscriber identity module. Also, the mobile communication device 200 can store multiple country codes for the HPLMN 110 and the multiple country codes can include the alternate country code for the HPLMN 110. The mobile communication device 200 can receive an over the air refresh message for modifying stored country codes and modify the stored country codes based on the over the air refresh message.

In step 330, the mobile communication device 200 can operate on the VPLMN 112 having a second country code. The alternate country code can be the same code as the second country code. In step 340 the mobile communication device 200 can perform a public land mobile network search. The public land mobile network search can be a higher priority public land mobile network search. In step 350, the mobile communication device 200 can switch to the HPLMN 110 based on the public land mobile network search. The mobile communication device 200 can detect the HPLMN 110 while performing the public land mobile network search in step 340 and can then switch to the home public land mobile network in step 350 based on detecting the HPLMN 110. In step 360, the flowchart 300 ends.

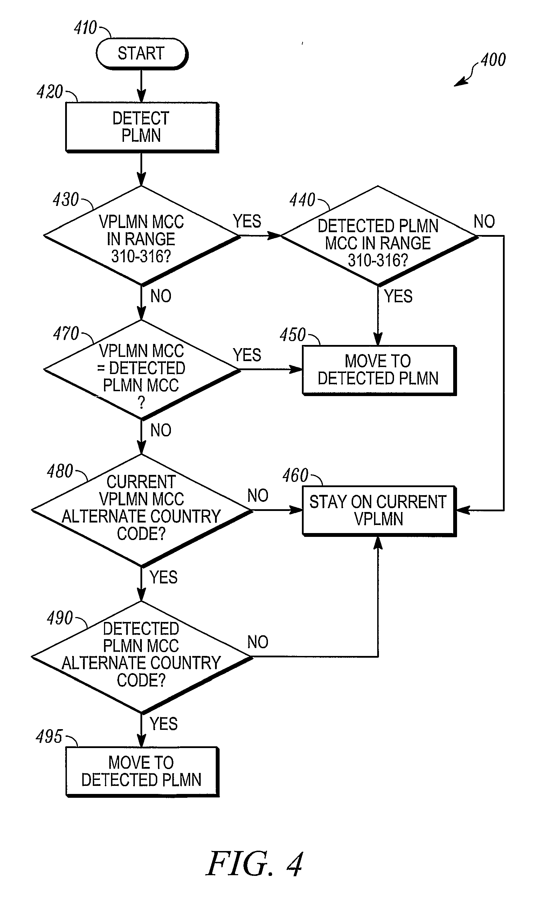

Fig. 4 is an exemplary flowchart 400 illustrating the operation of the mobile communication device 200 according to another embodiment. This flowchart 400 illustrates an example of the operation of a PLMN higher priority search in determining whether to switch to a detected PLMN while operating on a VPLMN 112.

In step 410, the flowchart begins. In step 420, the mobile communication device 200 can detect a PLMN other than the VPLMN 112 on which it is operating. In step 430, the mobile communication device 200 can determine if the MCC of the VPLMN 112 is in the range of 310-316. This step can be used because current standards assign the United States to a range of MCC's from 310-316 and have special rules for these MCC's. However this step may not be necessary if the standards change. If the answer to step 430 is yes, in step 440, the mobile communication device 200 determines if the detected PLMN MCC is in the range of 310-316. If so, in step 450, the mobile communication device 200 moves to the detected PLMN. If not, in step 460, the mobile communication device 200 stays on the current VPLMN 112.

If the answer to step 430 is no, in step 470, the mobile communication device 200 can determine if the current VPLMN MCC is the same as the detected PLMN MCC. If so, in step 450, the mobile communication device 200 can move to the detected VPLMN. If not, in step 480, the mobile communication device 200 can determine if the current VPLMN MCC is an alternate country code for the HPLMN 110. If not, in step 460, the mobile communication device 200 stays on the current VPLMN 112. If so, in step 490, the mobile communication device 200 can determine if the detected VPLMN MCC is an alternate country code for the HPLMN 110. If not, in step 460, the mobile communication device 200 stays on the current VPLMN 112. If so, in step 495, the mobile communication device 200 can move to the detected VPLMN.

The method of this disclosure is preferably implemented on a programmed processor. However, the controllers, flowcharts, and modules may also be implemented on a general purpose or special purpose computer, a programmed microprocessor or microcontroller and peripheral integrated circuit elements, an ASIC or other integrated circuit, a hardware electronic or logic circuit such as a discrete element circuit, a programmable logic device such as a PLD, PLA, FPGA or PAL, or the like. In general, any device on which resides a finite state machine capable of implementing the flowcharts shown in the Figures may be used to implement the processor functions of this disclosure.

While this disclosure has been described with specific embodiments thereof, it is evident that many alternatives, modifications, and variations will be apparent to those skilled in the art. For example, various components of the embodiments may be interchanged, added, or substituted in the other embodiments. Also, all of the elements of each figure are not necessary for operation of the disclosed embodiments. Accordingly, the preferred embodiments of the disclosure as set forth herein are intended to be illustrative, not limiting and various changes may be made without departing from the scope of the disclosure as defined by the appended claims.

## Claims

1. A method in a mobile communication device having a home public land mobile network, the home public land mobile network having a first country code, the method comprising:
storing an alternate country code for the home public land mobile network;
operating on a visiting public land mobile network having a second country code;
performing a public land mobile network search; and
switching to the home public land mobile network based on the public land mobile network search, wherein the alternate country code is the same code as the second country code.

2. The method according to claim 1, wherein storing further comprises storing an alternate country code for the home public land mobile network in a public land mobile network list on a subscriber identity module.

3. The method according to claim 1, further comprising detecting the home public land mobile network,
wherein switching comprises switching to the home public land mobile network based on detecting the home public land mobile network.

4. The method according to claim 1, wherein the public land mobile network search is a higher priority public land mobile network search.

5. A mobile communication device configured to operate on a home public land mobile network, the home public land mobile network having a first country code, the mobile communication device comprising:
a transceiver;
a memory;
a controller coupled to the transceiver and the memory, the controller configured to operate the mobile communication device on a visiting public land mobile network having a second country code;
a public land mobile network search module configured to perform a public land mobile network search; and
a public land mobile network switch module configured to switch the mobile communication device to the home public land mobile network based on the public land mobile network search,
the memory including an alternate country code for the home public land mobile network, wherein the alternate country code is the same code as the second country code.

6. The mobile communication device according to claim 5, wherein the memory includes the alternate country code for the home public land mobile network in a public land mobile network list on a subscriber identity module.

7. The mobile communication device according to claim 5, wherein the public land mobile network search module is further configured to detect the home public land mobile network, and
wherein the public land mobile network switch module is further configured to switch to the home public land mobile network based on detecting the home public land mobile network.

8. The mobile communication device according to claim 5, wherein the public land mobile network search is a higher priority public land mobile network search.

## Patentansprüche

1. Verfahren in einer mobilen Kommunikationsvorrichtung mit einem lokalen öffentlichen Mobilkommunikationsnetz, wobei das lokale öffentliche Mobilkommunikationsnetz eine erste Länderkennzahl aufweist, wobei das Verfahren Folgendes aufweist:
Speichern einer wechselnden Länderkennzahl für das lokale öffentliche Mobilkommunikationsnetz;
Betreiben in einem öffentlichen Gast-Mobilkommunikationsnetz mit einer zweiten Länderkennzahl;
Durchführen einer öffentlichen Mobilkommunikationsnetz-Suche; und
Schalten zum lokalen öffentlichen Mobilkommunikationsnetz basierend auf der öffentlichen Mobilkommunikationsnetz-Suche, wobei die wechselnde Länderkennzahl dieselbe Kennzahl wie die zweite Länderkennzahl ist.

2. Verfahren nach Anspruch 1, wobei das Speichern ferner ein Speichern einer wechselnden Länderkennzahl für das lokale öffentliche Mobilkommunikationsnetz in einer öffentlichen Mobilkommunikationsnetz-Liste auf einem Subskribenten-Identifikationsmodul aufweist.

3. Verfahren nach Anspruch 1, das ferner ein Erfassen des lokalen öffentlichen Mobilkommunikationsnetzes aufweist,
wobei das Schalten ein Schalten zu dem lokalen öffentlichen Mobilkommunikationsnetz basierend auf dem Erfassen des lokalen öffentlichen Mobilkommunikationsnetzes aufweist.

4. Verfahren nach Anspruch 1, wobei die öffentliche Mobilkommunikationsnetz-Suche eine öffentliche Mobilkommunikationsnetz-Suche mit höherer Priorität ist.

5. Mobile Kommunikationsvorrichtung, die dazu ausgestaltet ist, in einem lokalen öffentlichen Mobilkommunikationsnetz betrieben zu werden, wobei das lokale öffentliche Mobilkommunikationsnetz eine erste Länderkennzahl aufweist, wobei die mobile Kommunikationsvorrichtung Folgendes aufweist:
einen Sendeempfänger;
einen Speicher;
eine Steuerung, die mit dem Sendeempfänger und dem Speicher verbunden ist, wobei die Steuerung dazu ausgestaltet ist, die mobile Kommunikationsvorrichtung in einem öffentlichen Gast-Mobilkommunikationsnetz mit einer zweiten Länderkennzahl zu betreiben;
ein öffentliches Mobilkommunikationsnetz-Suchmodul, das dazu ausgestaltet ist, eine öffentliche Mobilkommunikationsnetz-Suche durchzuführen;
ein öffentliches Mobilkommunikationsnetz-Schaltmodul, das dazu ausgestaltet ist, die mobile Kommunikationsvorrichtung zum lokalen öffentlichen Mobilkommunikationsnetz basierend auf der öffentlichen Mobilkommunikationsnetz-Suche zu schalten;
wobei der Speicher eine wechselnde Länderkennzahl für das lokale öffentliche Mobilkommunikationsnetz aufweist, wobei die wechselnde Länderkennzahl dieselbe Kennzahl wie die zweite Länderkennzahl ist.

6. Mobile Kommunikationsvorrichtung nach Anspruch 5, wobei der Speicher die wechselnde Länderkennzahl für das lokale öffentliche Mobilkommunikationsnetz in einer öffentlichen Mobilkommunikationsnetz-Liste auf einem Subskribenten-Identifikationsmodul aufweist.

7. Mobile Kommunikationsvorrichtung nach Anspruch 5, wobei das öffentliche Mobilkommunikationsnetz-Suchmodul ferner dazu ausgestaltet ist, das lokale öffentliche Mobilkommunikationsnetz zu erfassen, und
wobei das öffentliche Mobilkommunikationsnetz-Schaltmodul ferner dazu ausgestaltet ist, zum lokalen öffentlichen Mobilkommunikationsnetz basierend auf der Erfassung des lokalen öffentlichen Mobilkommunikationsnetzes zu schalten.

8. Mobile Kommunikationsvorrichtung nach Anspruch 5, wobei die öffentliche Mobilkommunikationsnetz-Suche eine öffentliche Mobilkommunikationsnetz-Suche mit höherer Priorität ist.

## Revendications

1. Procédé dans un dispositif de communication mobile ayant un réseau mobile terrestre public de départ, le réseau mobile terrestre public de départ ayant un premier code de pays, le procédé comprenant :
stocker un code de pays alternatif pour le réseau mobile terrestre public de départ ;
fonctionner sur un réseau mobile terrestre public de visite ayant un deuxième code de pays ;
exécuter une recherche de réseau mobile terrestre public ;
commuter au réseau mobile terrestre public de départ sur la base de la recherche de réseau mobile terrestre public, où le code de pays alternatif est le même code que le deuxième code de pays.

2. Procédé selon la revendication 1, dans lequel le stockage comprend en outre le stockage d'un code de pays alternatif pour le réseau mobile terrestre public de départ dans une liste de réseaux mobiles terrestres publics sur un module d'identité d'abonné.

3. Procédé selon la revendication 1, comprenant en outre la détection du réseau mobile terrestre public de départ,
où la commutation comprend la commutation au réseau mobile terrestre public de départ sur la base de la détection du réseau mobile terrestre public de départ.

4. Procédé selon la revendication 1, dans lequel la recherche du réseau mobile terrestre public est une recherche de réseau mobile terrestre public d'une priorité plus élevée.

5. Dispositif de communications mobile configuré pour fonctionner sur un réseau mobile terrestre public de départ, le réseau mobile terrestre public de départ ayant un premier code de pays, le dispositif de communication mobile comprend :
un émetteur-récepteur ;
une mémoire ;
un contrôleur couplé à l'émetteur-récepteur et à la mémoire, le contrôleur étant configuré pour faire fonctionner le dispositif de communications mobile sur un réseau mobile terrestre public de visite ayant un deuxième code de pays ;
un module de recherche de réseau mobile terrestre public configuré pour exécuter une recherche de réseau mobile terrestre public ; et
un module de commutation de réseau mobile terrestre public configuré pour commuter le dispositif de communication mobile au réseau mobile terrestre public de départ sur la base de la recherche du réseau mobile terrestre public,
la mémoire incluant un code de pays alternatif pour le réseau mobile terrestre publique de départ, où le code de pays alternatif est le même code que le deuxième code de pays.

6. Dispositif de communication mobile selon la revendication 5, dans lequel la mémoire comprend le code de pays alternatif pour le réseau mobile terrestre public de départ dans une liste de réseaux mobiles terrestres publics sur un module d'identité d'abonné.

7. Dispositif de communication mobile selon la revendication 5, dans lequel le module de recherche de réseau mobile terrestre public est en outre configuré pour détecter le réseau mobile terrestre public de départ, et
où le module de commutation de réseau mobile terrestre public est en outre configuré pour commuter au réseau mobile terrestre public de départ sur la base de la détection du réseau mobile terrestre public de départ.

8. Dispositif de communications mobile selon la revendication 5, dans lequel la recherche du réseau mobile terrestre public est une recherche de réseau mobile terrestre public d'une priorité plus élevée.
